# EUROPÄISCHE PATENTSCHRIFT

(11) **EP 0 876 752 B1**
(45) Veröffentlichungstag und Bekanntmachung des Hinweises auf die Patenterteilung: **04.06.2003**
(21) Anmeldenummer: 98104665.9
(22) Anmeldetag: 16.03.1998
(51) Int. Cl.: A01F 15/08

(54) **Überwachungs- und Steuerungssystem zur Regelung der Arbeitsfunktionen einer Ballenpresse**
Guard- and controlsystem for steering the workingfunctions of a baler
Système de surveillance et de contrôle pour régler les fonctions de travail d'une presse à balles

(30) Priorität: 05.05.1997 DE 19718830
(43) Veröffentlichungstag der Anmeldung: 11.11.1998
(73) Patentinhaber: Usines Claas France, 57140 St. Remy/Woippy (FR)
(72) Erfinder: Mesmer, Denis, 57320 Bouzonville (FR); Hawlas, Martin, 33428 Harsewinkel (DE); Nonhoff, Ansgar, 48653 Coesfeld (DE); Scholz, Egbert, 33378 Rheda (DE)
(74) Vertreter: Klesper, Hanns-Otto

(56) Entgegenhaltungen:
- DE-A- 4 442 479
- DE-A- 19 621 391
- DE-U- 29 601 671
- US-A- 4 548 027

## Beschreibung

Die Anmeldung betrifft ein System zur Überwachung und Steuerung der Arbeitsfunktionen einer Ballenpresse, bestehend aus einer Aufnahmevorrichtung, einem Zuführkanal mit Förder- und wahlweise Schneidelementen, einer Preßkammer mit einem Preßkolben bei einer Kanalpresse sowie seitlichen Begrenzungen der Preßkammer, einer Abgabevorrichtung, Bindevorrichtungen sowie zugehörigen Bedieneinrichtungen, Sensoren und Kontrolleinrichtungen und Antriebsmitteln.

Aus der DE 44 42 479 ist ein Überwachungs- und Steuersystem für Ballenpressen bekannt, das mehrere Funktionen der Ballenpresse überwacht und steuert. Die in dieser Schrift beschriebenen systeme beziehen sich auf die Steuerung und Regelung der normalen Arbeitsabläufe in einer Ballenpresse. Neuerdings werden Ballenpressen jedoch mit schaltbaren Überlastkupplungen ausgestattet, die es dem Benutzer der Ballenpresse erlauben, das theoretische Leistungspotential seiner Maschine stäker auszulasten, ohne deshalb häufigere Stillstandszeiten wegen eines Ersatzes von Scherbolzen zu riskieren. Dabei wäre es sinnvoll, die Funktion der Überlastkupplungen in sinnvoller Weise zu verknüpfen, um Verstopfungen der Ballenpresse zu vermeiden. Die Integration solcher schaltbarer Überlastkupplungen in ein Überwachungs- und Steuerungssystem für Ballenpressen wäre deshalb wünschenswert. Auch fehlt die Überwachung und Steuerung von Schneidwerken in Ballenpressen, und es sollte die Möglichkeit bestehen, das System mit verschiedenen Terminals zu koppeln.

Es ist die Aufgabe der vorliegenden Erfindung, das bekannte Überwachungs- und Steuerungssystem erfindungsgemäß zu verbessern.

Die Aufgabe wird gelöst, indem eines oder mehrere der Arbeitsorgane der Ballenpresse, die mit schaltbaren Kupplungen ausgestattet sind, von dem System zur Überwachung und Steuerung in ihrer Drehzahl überwacht werden und bei Unter- oder Überschreitung von Grenzdrehzahlen durch Betätigung der Kupplung ausgeschaltet werden, wobei das Schaltsignal zur Betätigung der Kupplung von dem System zur Überwachung und Steuerung generiert wird. Weitere vorteilhafte Ausgestaltungen der Erfindung finden sich in den Unteransprüchen. Weiter ist es vorteilhaft, wenn das Überwachungs- und Steuerungssystem bei ausgeschwenkten Messern automatisch zeitgetaktet oder jeweils beim Anheben oder Absenken der Aufnahmevorrichtung die Schneidmesser in den Zuführkanal ein- und ausfährt, um ein Verstopfen der Messerschlitze im Boden des Zuführkanals zu vermeiden. Durch den Aufbau des Überwachungs- und Steuerungssystems aus zumindest 2 identischen Jobrechnern mit zumindest weitgehend identischem hardwaremäßigem Aufbau und mit gleicher programmierter Software ergeben sich Vorteile bei der Reparatur und Ersatzteilbevorratung eines solchen Systems, und Sonderausstattungen wie Schneideinrichtungen, Feuchte- oder Gewichtssensoren etc. können durch zusätzliche Jobrechner realisiert werden, und insgesamt lassen sich die Komponenten kostengünstig in größeren Stückzahlen herstellen.

Die Erfindung wird im folgenden anhand eines Ausführungsbeispiels näher erläutert. Es zeigen:
- Figur 1: eine Großballenpresse in der Seitenansicht,
- Figur 2: ein Ablaufschema zur sinnvollen Verknüpfung der Drehzahlüberwachung von Arbeitskomponenten,
- Figur 3: ein Ablaufschema für einen beispielhaften Aufbau der Adressenübernahme der Jobrechner eines Hardwaresystems.

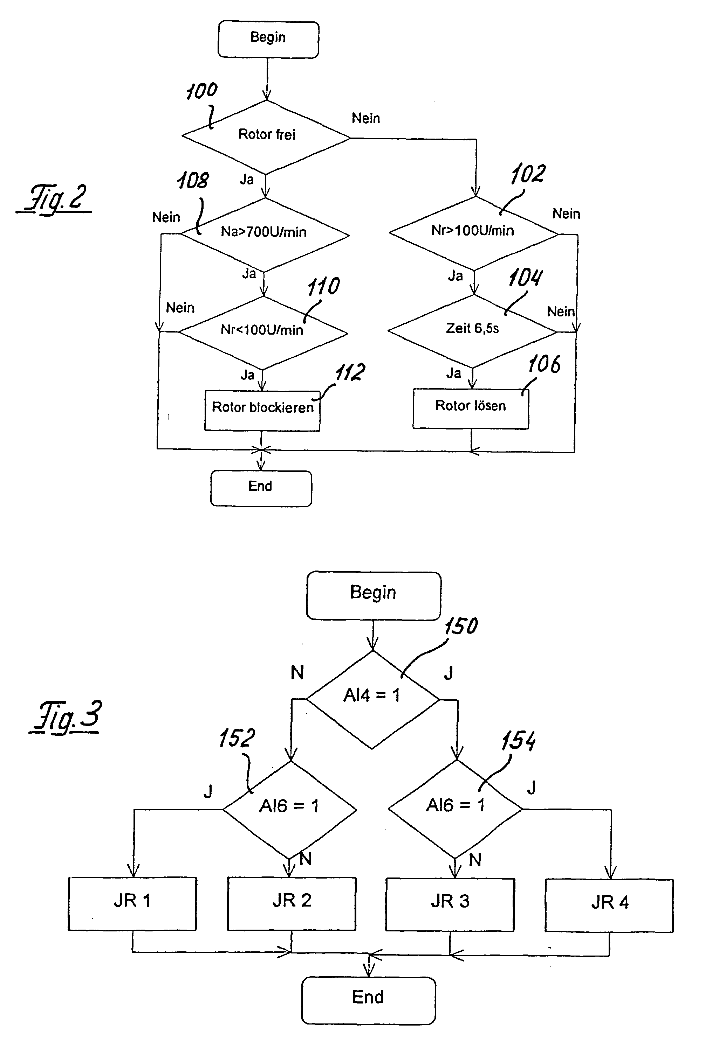

Figur 1 zeigt eine schematische Darstellung einer Großballenpresse 2 mit einer Aufnahmevorrichtung 4, die das Erntegut vom Boden aufnimmt, einer Schneideinrichtung 6 mit Messern 8, die das Erntegut schneiden, einem Zuführkanal 10 mit einem Förderer 12, durch den das Erntegut hindurchbefördert wird, einer Preßkammer 14 mit einem Preßkolben 16, in dem das neu hinzugeförderte Erntegut vom Preßkolben 16 gegen einen Erntegutstrang 20 gepreßt und dieser dadurch vorgeschoben wird in Richtung der Abgaberutsche 26. Erreicht der Erntegutstrang 20 eine gewünschte Länge, so wird durch eine Knotervorrichtung 22 mit den Bindenadeln 24 ein Teil des Erntegutstrangs 20 zu einem fertigen Ballen abgebunden. Der fertig gebundene Ballen wird dann über die Abgaberutsche 26 auf das Feld abgelegt. Alle Arbeitsorgane der Großballenpresse 2 werden von Hauptgetriebe 28 aus mechanisch und über Hydraulikleitungen von einer Pumpe aus hydraulisch angetrieben. Auch elektrische Antriebe sind möglich.

Die Schneideinrichtung 6 und der Förderer 12, der auch als Rotationsförderer mit gesteurten Zinken ausgeführt sein kann, sind mit Schaltkupplungen 30 ausgestattet. Auch die Schwungscheibe 32 ist mit einer Schaltkupplung 30 ausgestattet. Die Schaltkupplungen 30 sind jede für sich automatisch auslösende Überlastkupplungen, um Überlastungen von Arbeitsorganen zu vermeiden, dank der erfindungsgemäßen Steuerung und Überwachung könnten die Schaltkupplungen 30 jedoch auch ohne Überlastsicherung nur durch die Drehzahlkontrolle so geschaltet werden, daß keine Überlastung von Arbeitsorganen auftritt. Die Antriebswellen, die von den Schaltkupplungen 30 gekuppelt werden, werden in ihren Drehzahlen von Drehzahlsensoren 32 überwacht. Die von den Sensoren 32 gemessenen Drehzahlwerte werden an eine Auswerteelektronik 34 übermittelt. Dort werden die ermittelten Drehzahlen ausgewertet und bei Feststellung der Überschreitung von Grenzdrehzahlen eine Abschaltung einer oder mehrerer der betreffenden Schaltkupplungen 30 ausgelöst. Dazu übermittelt die Auswerteelektronik ein Schaltsignal an die Schaltkupplungen 30, die dann dem Signal entsprechend den Kraftfluß unterbrechen oder auch wieder herstellen. Zusätzlich können zu den Schaltsignalen der Auswerteelektronik 34 weitere Stellsignale an andere Arbeitsorgane abhängig von der Schaltstellung der Schaltkupplungen 30 übermittelt werden. So ist es beispielsweise vorteilhaft, bei einer Abschaltung der Schneideinrichtung 6 gleichzeitig die Schneidmesser 8 aus dem Zuführkanal 10 auszuschwenken, um so die Last für die Schneideinrichtung 6 zu verringern und ein Verstopfen der Großballenpresse 2 zu vermeiden.

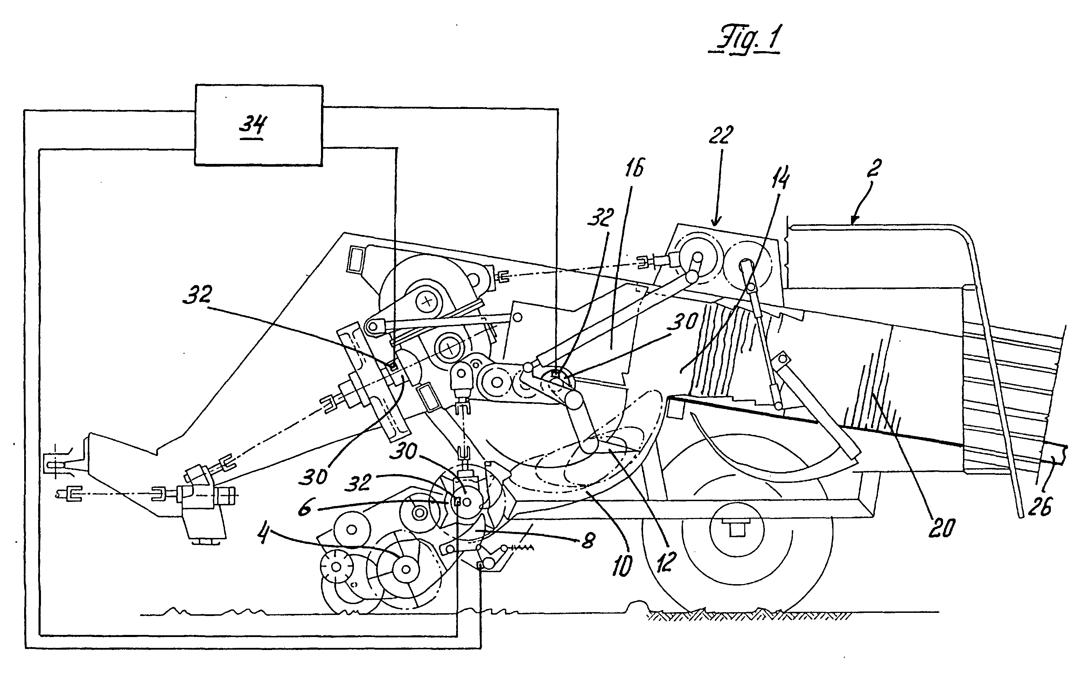

In Figur 2 ist beispielhaft ein Ablaufschema für eine Steuerung und Überwachung von Arbeitsfunktionen einer Ballenpresse gezeigt. Das Schema soll die Überwachung eines Förderers 12 erläutern. Das System zur Überwachung und Steuerung überprüft zunächst auf Stufe 100, ob die Schneideinrichtung 6 frei arbeitet. Ist die Schneideinrichtung 6 blockiert, so wird bei Stufe 102 geprüft, ob der Förderer 12 mit einer Drehzahl (N(r)) von beispielsweise mindestens 100 U/min. arbeitet. Arbeitet er mit N(r) < 100 U/min., so wird erneut eine Regelschleife bei 100 gestartet. Arbeitet er mit N(r) > /= 100 U/min., so wird bei Sufe 104 6,5 Sekunden gewartet, um den Förderer 12 den Zuführkanal 10 freiräumen zu lassen. Sodann löst das Überwachungs- und Steuerungssystem 34 auf Stufe 106 die Schneideinrichtung 6, indem die betreffende Schaltkupplung 30 wieder auf Durchtrieb geschaltet wird. Danach erfolgt ein neuer Start der Regelschleife bei 100. Stellt das Überwachungs- und Steuerungssystem 34 auf Stufe 100 fest, daß die Schneideinrichtung 6 frei arbeitet, so wird auf Stufe 108 geprüft, ob die Drehzahl N(a) der Zapfwelle - oder einer anderen Hauptantriebswelle mit entsprechenden Drehzahlen - mindestens 700 U/min. beträgt. Liegt die Eingangsdrehzahl darunter, braucht nichts abgeschaltet zu werden, da die Kräfte bei den niedrigen Drehzahlen unkritisch sind. liegt die Drehzahl jedoch darüber, so wird auf Stufe 110 geprüft, ob die Drehzahl N(r) des Förderers 12 über 100 U/min. liegt oder nicht. Liegt sie unter 100 U/min., sodroht der Förderer 12 überlastet zu werden oder zu verstopfen, und es ist erforderlich, die Schneideinrichtung 6 stillzusetzen, um eine Überlastung zu vermeiden. Dementsprechend schaltet das Überwachungs- und Steuerungssystem 34 auf Stufe 112 die Schneideinrichtung 6 ab. Bei einer Drehzahl von N(r) > 100 U/min. liegt ein Normalbetrieb vor, und es sind keine Schaltungen erfoderlich. Die Regelschleife braucht nur Bruchteile von Sekunden, um durchlaufen zu werden, und sie wiederholt sich im Regelfall mehrmals pro Sekunde.

Auf die beschriebene Weise werden die Schaltfunktionen der beiden Arbeitsorgane 6, 12 auf sinnvolle und beispielhafte Weise abhängig von der Eingangsdrehzahl der Zapfwelle miteinander verknüpft. Die Drehzahlregeleung kann jedoch auch unabhängig von der Eingangsdrehzahl der Zapfwelle erfolgen, oder auch jeweils separat für je ein Arbeitsorgan. Die genannten Drehzahlen dienen nur dem Ausführungsbeispiel und können von einem Fachmann auf naheliegende Weise für eine eigene Anwendung nach Bedarf angepaßt werden. Auf entsprechende Weise können auch mehrere Förderer 12 oder mehreren Schneideinrichtungen 6 miteinander kombiniert überwacht und gesteuert werden. Auch ist es einfach, das geschilderte Funktionsprinzip auf die Nutzung in einer Rundballenpresse zu übertragen.

Figur 3 zeigt ein Ablaufschema für einen beispielhaften Aufbau einer Adressenübernahme der Jobrechner eines Überwachungs- und Steuerungssystems. Für dieses Ausführungsbeispiel besteht das Überwachungs- und Steuerungssystem aus mindestens 4 Jobrechnern, die hardwaremäßig weitgehend identisch sind und die die gleiche programmierte Software aufweisen. In der Fertigung ergeben sich bei einem solchen Aufbau des Systems Kostenvorteile wegen höherer Produktionsstückzahlen und weniger Sachnummern für die Einzelteile. Durch die Hardwareverkabelung der einzelnen Jobrechner miteinander wird festgelegt, welcher der Jobrechner 1 bis 4 der Haupt-Jobrechner ist. Der Haupt-Jobrechner startet die in Figur 3 gezeigte Ablauf-Routine beim Start des Systems und verteilt so die einzelnen Aufgaben der Jobrechner. Über die Abfrage von zwei Eingängen AI4 und AI6, ob Spannung anliegt, verteilt der Haupt-Jobrechner die Aufgaben. So wird auf Stufe 150 geprüft, ob am Eingang AI4 Spannung anliegt. Wenn keine Spannung anliegt, muß auf Stufe 152 geprüft werden, ob auf dem Eingang AI6 Spannung anliegt. Wenn abermals keine Spannung anliegt, so bekommt der Jobrechner 1 die Funktion JR1. Liegt auf Stufe AI6 Spannung an, so hat dieser Jobrechner die Funktion JR2. Entsprechend verteilen sich die Funktionen JR3 und JR4 auf den Stufen 150 und 154. Durch die Spannungsabfrage kann so eine Aufgabenverteilung dieser ansonsten möglichst ähnlichen Jobrechnern vorgenommen werden.

## Patentansprüche

1. System zur Überwachung und Steuerung der Arbeitsfunktionen einer Ballenpresse, bestehend aus einer Aufnahmevorrichtung, einem Zuführkanal mit Förder- und wahlweise Schneidelementen, einer Presskammer mit einem Presskolben bei einer Kanalpresse sowie seitlichen Begrenzungen der Presskammer, einer Abgabevorrichtung, Bindevorrichtungen sowie zugehörigen Bedieneinrichtungen, Sensoren und Kontrolleinrichtungen und Antriebsmitteln,
**dadurch gekennzeichnet,**
**dass** eines oder mehrere der Arbeitsorgane der Ballenpresse (2), die mit schaltbaren Kupplungen (30) ausgestattet sind, von dem System zur Überwachung und Steuerung (34) mittels geeigneter Sensoren (32) drehzahlüberwacht werden und bei Unter- oder Überschreitung von Grenzdrehzahlen durch Betätigung der Kupplung (30) ausgeschaltet werden, wobei das Schaltsignal zur Betätigung der Kupplung (30) von dem System zur Überwachung und Steuerung (34) generiert wird.

2. System nach Anspruch 1,
**dadurch gekennzeichnet,**
**daß** auch eine Zapfwelle oder eine Hauptantriebswelle drehzahlüberwacht wird und die Überwachung und Steuerung in Abhängigkeit von der Eingangsdrehzahl der Zapfwelle oder Hauptantriebswelle erfolgt.

3. System nach Anspruch 1 oder 2,
**dadurch gekennzeichnet,**
**daß** das System zur Überwachung und Steuerung (34) weitere Stellorgane in Abhängigkeit von der Schaltstellung der Kupplungen (30) steuert.

4. System nach einem oder mehreren der vorhergehenden Ansprüche,
**dadurch gekennzeichnet,**
**dass** das Überwachungs- und Steuersystem (34) bei ausgeschwenkten Messern (8) automatisch zeitgetaktet oder beim Anheben oder Absenken der Aufnahmevorrichtung (4) die Schneidmesser (8) in den Zuführkanal (10) ein- und wieder ausschwenkt.

5. System nach einem oder mehreren der vorhergehenden,
**dadurch gekennzeichnet,**
**dass** das System zur Überwachung und Steuerung (34) aus mindestens zwei Jobrechnern (JR1-JR4) besteht und mindestens zwei der einem oder mehreren Arbeitsorganen der Ballenpresse (2) zugeordneten Jobrechner (JR 1-JR4) einen weitgehend identischen hardwaremäßigen Aufbau mit gleicher programmierter Software aufweisen.

6. System nach Anspruch 6
**dadurch gekennzeichnet,**
**daß** die Funktionen der Jobrechner über eine Abfrage der Verkabelung festgelegt sind.

## Claims

1. A system for monitoring and controlling the working functions of a bale press, comprising a pickup apparatus, a feed passage with conveyor and optionally cutting elements, a pressing chamber with a pressing piston in a passage press and lateral boundaries for the pressing chamber, a discharge apparatus, binding apparatuses and associated operating devices, sensors and control devices and drive means, **characterised in that** one or more of the working members of the bale press (2), which are equipped with shift clutches (30) are monitored in respect of rotary speed by the monitoring and control system (34) by means of suitable sensors (32) and are disengaged by actuation of the clutch (30) when the rotary speeds fall below or rise above limit rotary speeds, wherein the shift signal for actuation of the clutch (30) is generated by the monitoring and control system (34).

2. A system according to claim 1 **characterised in that** a power take-off shaft or a main drive shaft is also monitored in respect of rotary speed and monitoring and control is effected in dependence on the input rotary speed of the power take-off shaft or main drive shaft.

3. A system according to claim 1 or daim 2 **characterised in that** the monitoring and control system (34) controls further adjusting members in dependence on the shift position of the clutches (30).

4. A system according to one or more of the preceding claims **characterised in that** the monitoring and control system (34) when the blades (8) are pivoted out automatically in timed relationship or upon raising or lowering of the pickup apparatus (4) pivots the cutting blades (8) into the feed passage (10) and out again.

5. A system according to one or more of the preceding claims **characterised in that** the monitoring and control system (34) comprises at least two job computers (JR1-JR4) and at least two of the job computers (JR1-JR4) associated with one or more working members of the bale press (2) are of a substantially identical hardware construction with the same programmed software.

6. A system according to claim 5 **characterised in that** the functions of the job computers are established by way of interrogation of the wiring.

## Revendications

1. Système de surveillance et de contrôle des fonctions de travail d'une presse à balles, comprenant un dispositif de ramassage, un canal d'amenée avec des éléments de transport et des éléments de coupe activés de manière sélective, une chambre de compression avec un piston de compression, dans le cas d'une presse à canal de compression, et des parois latérales de chambre de compression, un dispositif de sortie, un dispositif de liage ainsi que des dispositifs de commande, des capteurs, des dispositifs de surveillance et des moyens d'entraînement associés, **caractérisé en ce que** la vitesse de rotation d'un ou plusieurs des organes de la presse à balles (2) équipés d'accouplements (30) débrayables, est surveillée par le système de surveillance et de contrôle (34) au moyen de capteurs (32) adaptés et **en ce que**, en cas de dépassement vers le haut ou vers le bas de vitesses limites, lesdits organes sont arrêtés par actionnement de l'accouplement (30), le signal d'actionnement de l'accouplement (30) étant généré par le système de surveillance et de contrôle (34).

2. Système selon la revendication 1, **caractérisé en ce que** la vitesse de rotation d'un arbre de prise de force ou d'un arbre d'entraînement principal est également surveillée et que la surveillance et le contrôle sont réalisés en fonction de la vitesse d'entrée de l'arbre de prise de force ou de l'arbre d'entraînement principal.

3. Système selon la revendication 1 ou 2, **caractérisé en ce que** le système de surveillance et de contrôle (34) commande d'autres organes de réglage en fonction de l'état des accouplements (30).

4. Système selon une ou plusieurs des revendications précédentes, **caractérisé en ce que** les couteaux (8) étant escamotés, le système de surveillance et de contrôle (34) sort et rentre les couteaux (8) dans le canal d'amenée (8) automatiquement de manière cyclique ou lors du relevage ou de l'abaissement du dispositif de ramassage (4).

5. Système selon une ou plusieurs des revendications précédentes, **caractérisé en ce que** le système de surveillance et de contrôle (34) est formé d'au moins deux calculateurs de tâches (JR1-JR4) et **en ce qu'**au moins deux des calculateurs de tâches (JR1-JR4) associés à un ou plusieurs organes de travail de la presse à balles (2) présentent une structure matérielle largement identique avec un même logiciel programmé.

6. Système selon la revendication 6, **caractérisé en ce que** les fonctions des calculateurs de tâches sont fixées par une interrogation des liaisons câblées.
